# FASCICULE DE BREVET EUROPEEN

(11) **EP 1 568 519 B1**
(45) Date de publication et mention de la délivrance du brevet: **13.08.2008**
(21) Numéro de dépôt: 05290342.4
(22) Date de dépôt: 16.02.2005
(51) Int. Cl.: B60D 5/00

(54) **Plancher pour soufflet d'interconnexion entre deux voitures**
Fussboden für Übergangs-Faltenbalg zwischen zwei Fahrzeuge
Floor for a communication passage bellow between two vehicles

(30) Priorité: 25.02.2004 FR 0401884
(43) Date de publication de la demande: 31.08.2005
(73) Titulaire: HUTCHINSON, 75008 Paris (FR)
(72) Inventeur: De Antonio, Richard, 91700 Sainte Genevieve des Bois (FR); Dalle Molle, Bruno, 77181 Courtry (FR)
(74) Mandataire: Jacquard, Philippe Jean-Luc

(56) Documents cités:
- EP-A- 0 860 305
- DE-A- 3 305 062
- FR-A- 2 764 856

## Description

La présente invention a pour objet un plancher élastique destiné à un soufflet de passage ou couloir d'interconnexion entre deux voitures et plus particulièrement destiné à des applications ferroviaires telles que métro, tramway, etc... ou bien à des véhicules articulés tels que des autobus.

Un tel plancher est connu par exemple du Brevet Européen EP 860 305 déposé par HUTCHINSON le 16 février 1998.

Un tel plancher présente des ondulations transversales qui sont renforcées par les lames métalliques, et de plus, la partie inférieure du plancher est elle-même renforcée par interposition de renforts en élastomère qui sont disposés entre les lames métalliques de renfort dans la partie centrale du plancher qui constitue une zone de passage. A la face supérieure du plancher, ou du tapis qui le recouvre, cette zone de passage est plane et est marquée par des pastilles en relief.

Chaque intervalle entre les lames reçoit ainsi un renfort dont la largeur est minimale au milieu du plancher et qui augmente progressivement en direction de bords longitudinaux de plancher qui sont solidarisés, une fois le support assemblé, à la caisse d'une voiture.

La Demande de Brevet Français FR-2 748 856 propose d'améliorer la déformabilité du plancher à l'aide de plots élastiques à section en losange espacés de l'axe longitudinal du plancher.

Ces renforts, tels qu'ils sont connus ont essentiellement pour inconvénient de ne pas permettre une répartition optimale des débattements lorsque les voitures se déplacent dans des configurations correspondant à un virage serré suivi d'un contre-virage, dans lesquelles les axes longitudinaux des voitures restent parallèles, mais sont décalés transversalement, avec un déploiement en éventail suivant un angle d'ouverture total α_{M}.

La présente invention a pour objet un plancher pour soufflet d'interconnexion qui permette de remédier à cet inconvénient.

L'invention concerne ainsi un plancher élastique pour soufflet d'interconnexion entre deux voitures tel que défini dans la revendication 1.

Le plancher peut être caractérisé en ce qu'au moins pour ladite paire de lames métalliques, les plots, qui constituent un renfort en élastomère interposé entre les lames de cette paire, sont au nombre de deux et présentent une même dimension transversale (Lₒ), et en ce qu'ils sont disposés symétriquement par rapport audit plan de symétrie.

Les renforts en élastomère peuvent être interposés entre des éléments métalliques dont chacun est solidarisé à une dite lame métallique. Les éléments métalliques et les renforts en élastomère forment ainsi au moins une structure démontable.

D'autres caractéristiques et avantages de l'invention apparaîtront mieux à la lecture de la description qui va suivre, donnée à titre d'exemple non limitatif, en liaison avec les dessins annexés, dans lesquels :
- la figure 1 représente schématiquement en vue de dessous une structure de renforts en élastomère selon l'art antérieur.
- la figure 2 illustre les débattements angulaires dans la configuration mentionnée ci-dessus (virage serré suivi d'un contre-virage).
- les figures 3a et 3b représentent en vue de dessous deux modes de réalisation d'un plancher présentant une structure de renforts en élastomère selon l'invention.
- les figures 4a à 4d représentent un mode de réalisation préféré de l'invention, dans laquelle la structure de renfort est démontable, les figures 4a à 4c représentant en vue de dessous et en perspective le plancher seul (figure 4a) et la structure de renfort (figure 4b), et l'ensemble plancher et structure de renfort assemblés (figure 4c), la figure 4d étant une vue de face de l'ensemble plancher et structure de renfort assemblés.

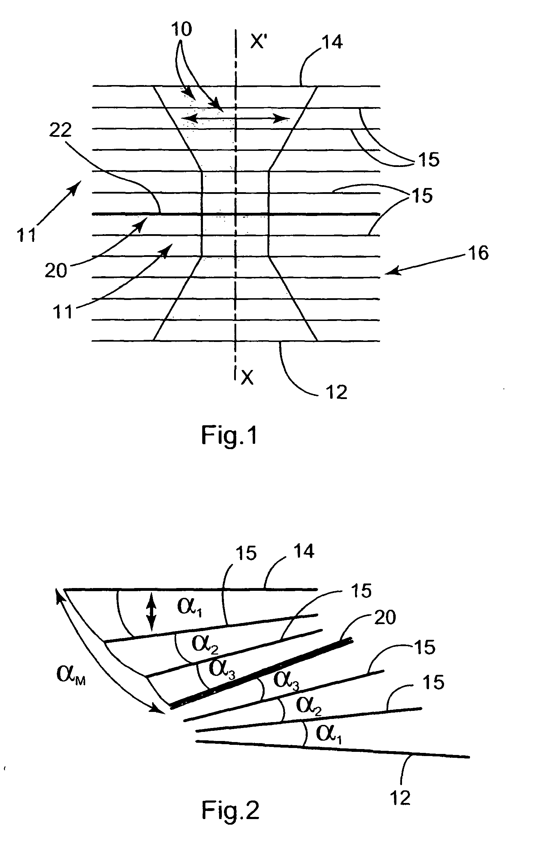

Comme le montre la figure 1, un plancher connu par exemple du Brevet EP 860 305 est une pièce massive en élastomère qui est obtenue par moulage et qui présente des ondulations transversales 16 pourvues de renforts constitués par des lames métalliques 15. Les ondulations 16 sont interrompues dans une région centrale du plancher par des renforts pleins 10 en élastomère dont la largeur L est minimale dans une région médiane 11 et qui augmente progressivement lorsqu'on se rapproche des extrémités longitudinales 12 et 14 qui sont solidaires de la caisse d'une voiture.

Dans le cas de deux demi planchers il existe un anneau central 22 dans le plan médian 20, et les deux demi planchers sont solidaires à une extrémité de la caisse d'une voiture. Ils sont identiques et montés tête bêche, leur autre extrémité étant solidaire de l'anneau central 22.

Comme le montre la figure 2, dans le cas d'une configuration comportant un virage serré, suivi d'un contre-virage, les bords de caisse des deux voitures, et donc les extrémités longitudinales 12 et 14 du plancher qui en sont solidaires, se trouvent sensiblement parallèles mais décalées latéralement, et il se produit une déformation en éventail, selon un angle total α_{M}, que l'on peut expliquer de la manière suivante.

La structure de renfort du plancher est une structure dite lamifiée qui associe des parties élastiques en élastomère (les renforts en élastomère) et des lames métalliques de renfort 15.

Le décalage latéral entre les extrémités 12 et 14 produit une action de cisaillement dans le plan horizontal dont l'effet se décompose :
- en une composante de translation des lames métalliques 15 dans la direction transversale, parallèlement aux extrémités 12 et 14.
- et en une composante de basculement relatif des lames métalliques 15 selon les angles α₁, α₂, α₃, ... et ce de manière symétrique par rapport au plan médian 20.

L'effort de basculement des lames 15 est plus important du côté des extrémités 12 et 14 et il est quasi-nul sur le plan médian 20 qui constitue un axe de symétrie transversal du plancher.

Le plancher de l'art antérieur (figure 1) a pour inconvénient que l'amplitude de la translation transversale n'est pas la même pour toutes les lames. Elle est plus importante dans la région médiane 11, ce qui induit dans cette région des niveaux de cisaillements élevés qui diminuent la durée de vie du plancher.

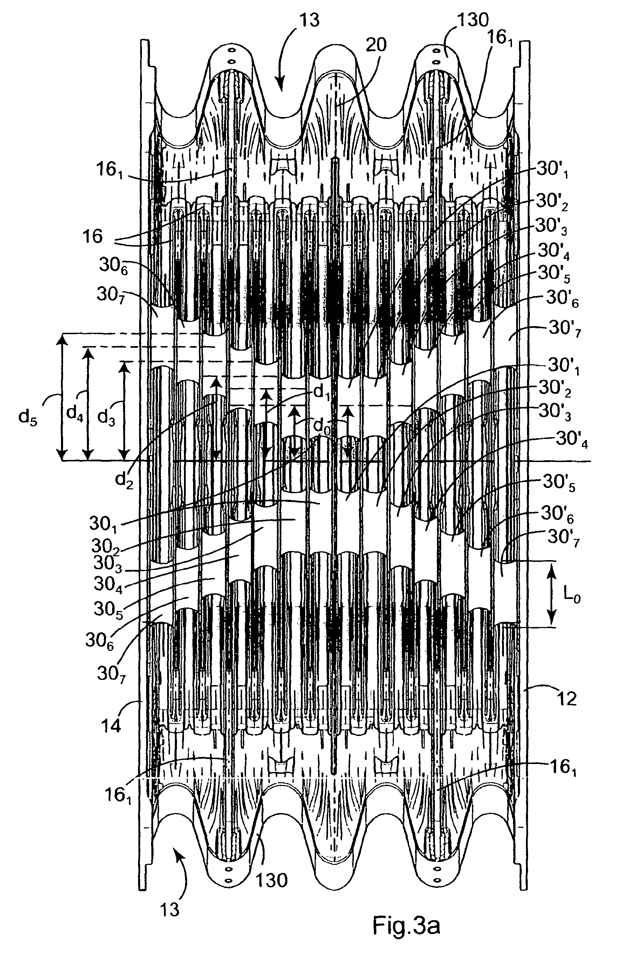

Le plancher représenté à la figure 3a présente de manière connue des bords remontants 13 pourvus d'ondulations 130 dont le pas est par exemple un multiple de celui des ondulations 16, et qui sont solidarisées à une région de soufflet (non représentée) qui ferme le contour des couloirs d'intercirculation. On observe également que certaines ondulations 16₁ dont les creux sont en face des creux d'ondulations 130 se prolongent transversalement jusqu'à ces derniers.

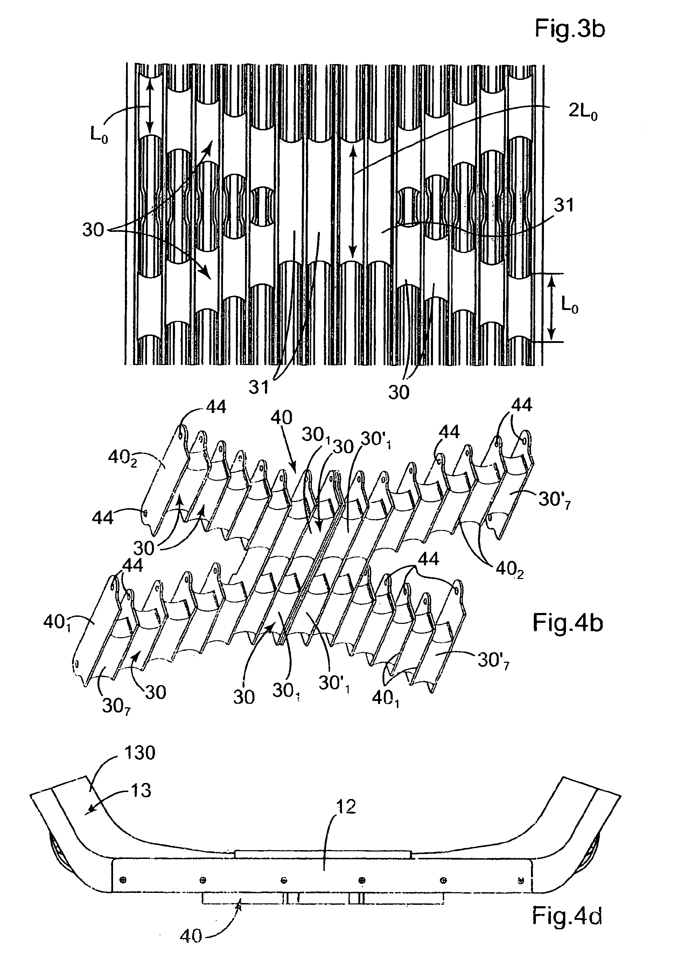

Selon l'invention et comme représenté à la figure 3a, les renforts ne sont plus continus, et ils sont au contraire séparés en au moins deux plots de renfort 30 en élastomère de même longueur Lₒ qui sont disposés symétriquement par rapport à la direction longitudinale XX' du plancher (définie comme la direction de déplacement en ligne droite des voitures). Alternativement, certains des plots peuvent se rejoindre dans la partie médiane pour former un seul renfort 31 de longueur 2 Lₒ (voir la figure 3b).

Dès que l'on s'écarte significativement du plan médian 20 où les contraintes de basculement sont faibles, les éléments de renfort 30 en élastomère s'écartent de plus en plus de l'axe longitudinal XX' au fur et à mesure que l'on se rapproche des extrémités longitudinales 12 et 14 où les contraintes de basculement sont les plus fortes, d'où la forme générale d'un X qui est ainsi obtenu.

Dans l'exemple de la figure 3a, les deux paires de plots de rang 1 30₁ et 30'₁ qui jouxtent le plan médian 20 et les deux paires de plots de rang 2 30₂ et 30'₂ sont espacées de l'axe XX' d'une distance d₀ et les deux paires de plots de rangs suivants 30₃,30'₃ ...30₇ et 30'₇ sont espacés de l'axe XX' d'une distance d₁, d₂, d₃, d₄, d₅, qui est supérieure à d₀ et qui croît progressivement avec le rang.

On obtient grâce au fait que la largeur totale des renforts est toujours égale à 2 Lₒ une répartition uniforme de l'amplitude de translation des lames, car, ainsi que les inventeurs l'ont mis en évidence, la composante de translation est la même pour toutes les lames métalliques 15.

Grâce au fait que les plots de renfort 30 de largeur Lₒ s'écartent progressivement et de manière symétrique du plan de symétrie longitudinale du plancher dont la trace est l'axe longitudinal XX', on obtient une répartition plus uniforme des angles de basculement (α₁, α₂, α₃, ... des lames métalliques 15, puisque cet écartement progressif (d₁, d₂, d₃, d₄, d₅) permet aux paires de plots de renfort d'opposer un couple progressivement croissant aux composantes de basculement, qui sont de plus en plus importantes au fur et à mesure que l'on se rapproche des bords de caisse des voitures. La meilleure répartition de ces angles de basculement permet d'augmenter la durée de vie du plancher et des éléments de renfort.

Il est ainsi possible de déterminer la loi d'écartement pour que les angles de basculement α₁, α₂, α₃, ... soient sensiblement égaux.

Une loi linéaire correspondant à l'exemple représenté (forme d'un X à branches droites) peut convenir en première approximation.

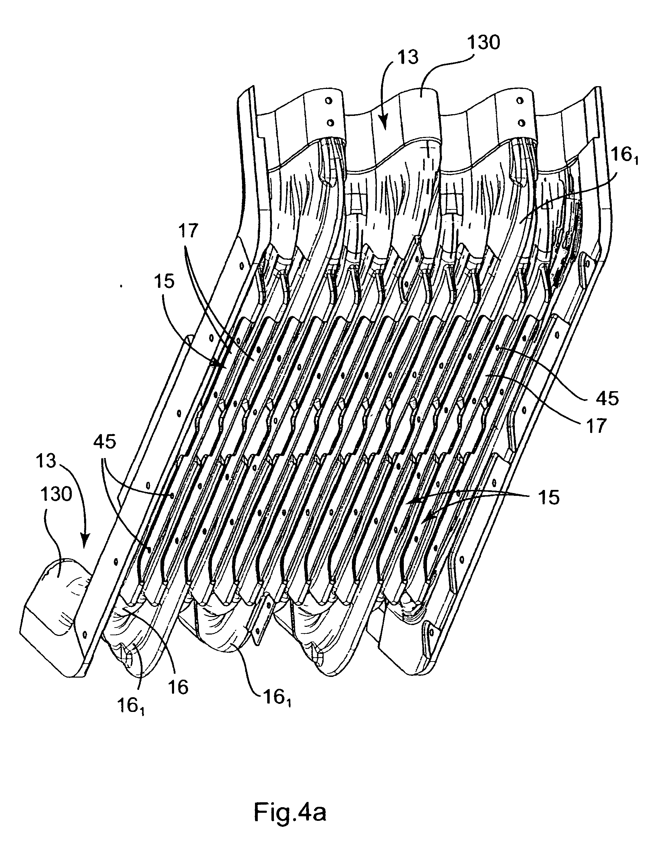

Le mode de réalisation préféré des figures 4a à 4d met en oeuvre une structure de renfort qui est démontable, ce qui présente plusieurs avantages :
- les éléments de renfort faisant partie d'une structure rapportée, il n'est plus nécessaire d'interrompre les ondulations 16 qui peuvent se poursuivre sans discontinuité. Ceci augmente la durée de vie du plancher, car on évite ainsi un raccordement entre les ondes 16 et les plots de renfort qui sont source de concentrations de contraintes ;
- comme les ondulations 16 ne sont plus interrompues par les éléments de renfort en élastomère, il est possible d'écarter ceux-ci de l'axe longitudinal d'une distance plus importante, ce qui facilite l'optimisation des angles de basculement ;
- la structure de renfort peut être remplacée sans remplacer le plancher ;
- la fabrication du plancher est simplifiée, et en particulier le moule est beaucoup plus simple.

Comme le montre plus particulièrement la figure 4b, la structure de renfort ou « poutre » amovible présente des éléments métalliques, notamment des lames métalliques 40 entre lesquelles sont intercalés les plots de renfort 30 de longueur Lₒ Ces lames métalliques 40 peuvent être en deux parties 40₁ et 40₂ alignées. Elles peuvent être continues, comme certaines des lames 40 représentées dans la partie médiane.

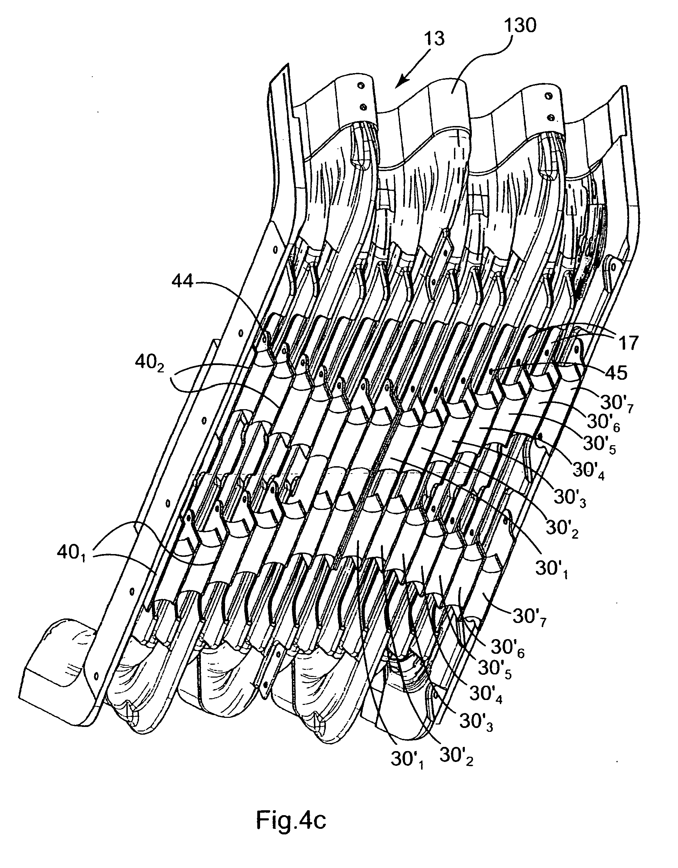

Chacune de ces lames métalliques 40 est fixée à une lame métallique 15 du plancher comme représenté à la figure 4c. Cette fixation est en général réalisée par vis et boulons à travers les trous homologues 44 et 45 des lames métalliques 40 et 15. A cet effet, les lames métalliques 15 présentent une région inférieure 17 qui est dégagée de la masse en élastomère qui constitue le plancher et dans laquelle le reste des lames 15 est noyé.

## Revendications

1. Plancher élastique pour soufflet d'interconnexion entre deux voitures qui, lors de leur déplacement en ligne droite, se déplacent selon une direction longitudinale, ledit plancher présentant des ondulations transversales lui permettant de suivre les déplacements relatifs desdites voitures dans les courbes, tout en permettant à des passagers de circuler entre les voitures en marchant sur la face supérieure du plancher, lesdites ondulations transversales étant renforcées par des lames métalliques s'étendant dans une direction transversale du plancher et comportant un renfort en élastomère interposé entre les lames métalliques **caractérisé en ce que** lesdits renforts en élastomère ont sensiblement la même dimension transversale 2 Lₒ et sont constitués d'au moins un plot en élastomère (30), **caractérisé en ce qu'**il présente de part et d'autre d'un plan médian transversal (20) du plancher n renforts en élastomère, dont ceux de rang i compris entre n-p et n sont constitués par au moins deux plots en élastomère (30ₙ₋ₚ, ...., 30ₙ₋₁, 30ₙ) dont la somme des dimensions transversales est égale à 2 Lₒ, le rang 1 désignant les renforts en élastomère adjacents à la région transversale médiane (20) et le rang n désignant les renforts en élastomère adjacents aux extrémités longitudinales (12, 14) du plancher, ces renforts en élastomère de rang i compris entre n-p et n comportant des plots en élastomère dont la distance d audit plan de symétrie (XX') du plancher est une fonction croissante du rang i.

2. Plancher selon la revendication 1 **caractérisé en ce qu'**au moins pour ladite paire de lames métalliques (15), les plots, qui constituent un renfort en élastomère interposé entre les lames de cette paire, sont au nombre de deux (30₇) et présentent une même dimension transversale (Lₒ), et **en ce qu'**ils sont disposés symétriquement par rapport audit plan de symétrie.

3. Plancher selon une des revendications 1 ou 2, **caractérisé en ce que** ladite fonction croissante est linéaire.

4. Plancher selon une des revendications 1 à 3 **caractérisé en ce que** les renforts en élastomère de rang compris entre 1 et n-p-1 sont constitués d'un plot continu ou bien d'une paire de plots espacés transversalement l'un de l'autre.

5. Plancher selon une des revendications précédentes, **caractérisé en ce que** n=7 et p=4.

6. Plancher selon une des revendications précédentes **caractérisé en ce que** lesdits renforts en élastomère sont interposés entre des éléments métalliques (40) dont chacun est solidarisé à une dite lame métallique (15) du plancher, lesdits éléments métalliques (40) et lesdits renforts en élastomère formant au moins une structure démontable.

## Claims

1. A flexible floor for an intercommunication bellows between two cars which, while they are traveling in a straight line, move in a longitudinal direction, said floor presenting transverse undulations enabling it to follow the relative displacements of said cars as they are going around bends, while also enabling passengers to go between the cars by walking on the top face of the floor, said transverse undulations being reinforced by metal blades extending in a transverse direction of the floor, and said floor being provided with an elastomer reinforcement interposed between the blades of each pair of said metal blades, said floor being **characterized in that** said elastomer reinforcements are of substantially the same transverse dimension 2L₀, and each of them is constituted by at least one elastomer block (30), **characterized in that**, on either side of the transverse midplane (20) of the floor, said floor has n elastomer reinforcements, each of those reinforcements of rank i lying in the range n-p to n being made up of at least two elastomer blocks (30ₙ₋ₚ, ..., 30ₙ₋₁, 30ₙ), for which the sum of the transverse dimensions is equal to 2L₀, the rank 1 designating the elastomer reinforcements adjacent to the transverse midplane (20) and the rank n designating the elastomer reinforcements adjacent to the longitudinal ends (12, 14) of the floor, said elastomer reinforcements of rank i lying in the range n-p to n being made up of elastomer blocks for which distance d from said plane of symmetry (XX') of the floor is an increasing function of rank i.

2. A floor according to claim 1, **characterized in that**, at least for said pair of metal blades (15), the number of blocks (30₇) that make up an elastomer reinforcement interposed between the blades of said pair is two, and each of said two blocks has the same transverse dimension (L₀), and **in that** they are disposed symmetrically about said plane of symmetry.

3. A floor according to claim 1 or claim 2, **characterized in that** said increasing function is linear.

4. A floor according to any one of claims 1 to 3, **characterized in that** each of the elastomer reinforcements of rank lying in the range 1 to n-p-1 is made up of one continuous block, or else of a pair of blocks spaced apart from each other transversely.

5. A floor according to any preceding claim, **characterized in that** n=7 and p=4.

6. A floor according to any preceding claim, **characterized in that** said elastomer reinforcements are interposed between metal elements (40), each of which is secured to a respective one of said metal blades (15) of the floor, said metal elements (40) and said elastomer reinforcements forming at least one removable structure.

## Patentansprüche

1. Elastischer Fußboden für einen Verbindungs-Faltenbalg zwischen zwei Wägen, die sich bei ihrer Bewegung in gerader Linie in einer Längsrichtung verschieben, wobei der Fußboden transversale Wellungen aufweist, die ihn in die Lage versetzen, den Relativbewegungen der Wägen in Kurven zu folgen, und es gleichzeitig Passagieren ermöglichen, sich durch Begehen der Oberseite des Fußbodens zwischen den Wägen hin- und herzubewegen, wobei die transversalen Wellungen durch Metallplatten verstärkt sind, die sich in einer Querrichtung des Fußbodens erstrecken und eine zwischen den Metallplatten angeordnete Verstärkung aus Elastomer aufweisen, **dadurch gekennzeichnet, dass** die Verstärkungen aus Elastomer im Wesentlichen die gleiche Querabmessung 2 L₀ besitzen und aus mindestens einem Klotz (30) aus Elastomer bestehen, **dadurch gekennzeichnet, dass** er auf beiden Seiten einer transversalen Mittenebene (20) des Fußbodens n Verstärkungen aus Elastomer aufweist, von denen diejenigen eines Ranges i, der zwischen n-p und n umfasst ist, aus mindestens zwei Klötzen aus Elastomer (30_{n-p, ...,} 30ₙ₋₁, 30ₙ) bestehen, deren Summe der Querabmessungen gleich 2 L₀ ist, wobei Rang 1 die zum transversalen Mittenbereich (20) benachbarten Verstärkungen aus Elastomer bezeichnet, und Rang n die zu den Längsenden (12, 14) des Fußbodens benachbarten Verstärkungen aus Elastomer bezeichnet, wobei diese Verstärkungen aus Elastomer eines Ranges i, der zwischen n-p und n umfasst ist, Klötze aus Elastomer aufweisen, deren Abstand d zu der Symmetrieebene (XX') des Fußbodens eine ansteigende Funktion des Ranges i ist.

2. Fußboden nach Anspruch 1 **dadurch gekennzeichnet, dass** zumindest bei dem Paar von Metallplatten (15) die Klötze, die eine zwischen den Platten dieses Paares angeordnete Verstärkung aus Elastomer darstellen, zwei (30₇) an der Zahl sind und eine gleiche Querabmessung (Lₒ) aufweisen, und dass sie symmetrisch in Bezug auf die Symmetrieebene angeordnet sind.

3. Fußboden nach einem der Ansprüche 1 oder 2, **dadurch gekennzeichnet, dass** die ansteigende Funktion linear ist.

4. Fußboden nach einem der Ansprüche 1 bis 3, **dadurch gekennzeichnet, dass** die Verstärkungen aus Elastomer eines Ranges, der zwischen 1 und n-p-1 umfasst ist, aus einem kontinuierlichen Klotz oder aus einem in Querrichtung voneinander beabstandeten Paar von Klötzen bestehen.

5. Fußboden nach einem der vorherigen Ansprüche, **dadurch gekennzeichnet, dass** n=7 und p=4.

6. Fußboden nach einem der vorherigen Ansprüche, **dadurch gekennzeichnet, dass** die Verstärkungen aus Elastomer zwischen metallischen Elementen (40) angeordnet sind, welche jeweils mit einer Metallplatte (15) des Fußbodens fest verbunden sind, wobei die metallischen Elemente (40) und die Verstärkungen aus Elastomer mindestens einen zerlegbaren Aufbau bilden.
